# EUROPEAN PATENT SPECIFICATION

(11) **EP 2 918 426 B1**
(45) Date of publication and mention of the grant of the patent: **18.10.2017**
(21) Application number: 15158446.3
(22) Date of filing: 10.03.2015
(51) Int. Cl.: B60C 9/00, B60C 9/20

(54) **HEAVY-DUTY PNEUMATIC TIRE**
SCHWERLASTLUFTREIFEN
PNEU POUR FONCTIONNEMENT INTENSIF

(30) Priority: 12.03.2014 JP 2014049076
(43) Date of publication of application: 16.09.2015
(73) Proprietor: Sumitomo Rubber Industries, Ltd., Kobe-shi, Hyogo 651-0072 (JP)
(72) Inventor: Oya, Yukihide, Kobe-shi,, Hyogo 651-0072 (JP); Okabe, Taro, Kobe-shi,, Hyogo 651-0072 (JP)
(74) Representative: TBK

(56) References cited:
- EP-A1- 0 655 352
- EP-A2- 1 162 086

## Description

### Field of the Invention

The present invention relates to a heavy-duty pneumatic tire.

### Background Art

A pneumatic tire has a belt to reinforce the carcass. A heavy load is applied on heavy-duty pneumatic tires to be mounted on vehicles such as trucks and buses. The belt in a heavy-duty tire usually includes three or more ply layers to increase the effect of the reinforcement on the carcass.

Numerous cords arranged in parallel and a topping rubber are contained in each ply. Each cord inclines to the equatorial plane of the tire. To further increase the reinforcement effect of the belt, the inclination direction of the cords positioned in the second layer from the carcass side is made opposite the inclination direction of the cords in the third layer.

Tires repeatedly deform while they are running. Since the shoulder section of a tire receives greater pressure when it touches the ground, it makes greater deformation as well. Thus, deformation repeatedly occurs to a greater degree at the edge of a belt ply. As a result, heat is generated in the rubber, and peeling of a ply on the edge may occur.

Lower-profile tires are also employed for heavy-duty tires to improve transportation efficiency. When the aspect ratio of a tire is smaller, the case line (the shape of a carcass on the tire meridian cross section) changes from a circle to an ellipse. In a tire having an elliptical case line, when inflation pressure fills a tire with air, it exerts a greater load on the edge on the axially outer side of a belt. As a result, the fatigue resistance of the belt decreases. In the tire industry, peeling of belt plies has been observed in the lower vicinity of the grooves in the shoulder section (also referred to as shoulder grooves) of a low-profile tire. Such peeling is seldom observed in a high-profile tire. When peeling occurs between plies of a belt, cracking originating in the peeled portion may occur in the tread or sidewall. Ply peeling reduces the durability of the tire.

Peeling in the belt in the lower vicinity of shoulder grooves results from a molding process of a tire in which protrusions in the molding die for forming shoulder grooves press the belt against the radially inner side of the tire. When a belt is pressed by the protrusions, the distance between cords (gauge D) in the adjacent plies in a thickness direction decreases. Accordingly, distortion between adjacent plies increases, thereby reducing the adhesiveness between the plies. Such a condition may be a reason for the aforementioned peeling to be more likely to occur when the tire deforms repeatedly during its run. To prevent decreased fatigue resistance and peeling between plies of the belt, increasing the thickness of the belt topping rubber (gauge J) may be a solution. However, such a method increases the tire mass.

Various studies have been conducted from the viewpoint of preventing peeling of belt plies. JP H4-183605A and JP H9-263108A disclose examples of such studies.

JP H4-183605A discloses a tire having a cushion rubber with a greater modulus than is provided between the plies on the second and third layers. The radially outer side of the third ply is covered with a rubber having a smaller modulus.

JP H9-263108A discloses a tire where the edge of a ply is covered with an end-cover rubber having a greater modulus.

Technologies to enhance light weight and rigidity of the belt in heavy-duty tires are known in JP H7-242102A also published as EP 0 655 352 A1 and corresponding with the features of the preamble of claim 1. EP 1 162 086 A2 relates to a pneumatic tyre which comprises a carcass extending between bead portions through a tread portion and sidewall portions, and a belt disposed radially outside of the carcass in the tread portion, wherein the belt comprises at least one monofilament cord ply made of parallel monofilament cords, each monofilament cord is a single metallic filament having a circular cross sectional shape, a diameter of from 0.35 to 0.70 mm, a tensile strength of from 2800 to 3700 Newton/sq.mm, and a bending rigidity of from 35 to 260 gf cm, and the cord count of the monofilament cords in the monofilament cord ply is in a range of from 30 to 50 /5 cm.

### PRIOR ART PUBLICATION

### PATENT PUBLICATION

Patent publication 1: JP H4-183605A
Patent publication 2: JP H9-263108A
Patent publication 3: JP H7-242102A

### SUMMARY OF THE INVENTION

### PROBLEMS TO BE SOLVED BY THE INVENTION

The objective of the present invention is to provide a heavy-duty pneumatic tire capable of suppressing interlayer separation in the belt by enhancing the rigidity of the belt without increasing the tire mass.

### SOLUTIONS TO THE PROBLEMS

A heavy-duty pneumatic tire according to one aspect of the present invention has a tread, a pair of sidewalls, a pair of beads, a carcass and a belt. The belt is formed with multiple plies laminated in a tire radial direction; each ply has numerous cords arranged in parallel and a topping rubber; a cord has a 1 ×4 single-strand structure; the ratio A (=F/E) of flexural rigidity (F) to tensile strength (E) of each cord is 0.090≤A≤0.112, and tensile strength (E) per cord is 1550N≤E≤1750N.

The ratio A (=F/E) is preferred to be 0.098≤A≤0.108.

The outer diameter (df) of a filament in the cord is preferred to be 0.410 mm≤df≤0.445 mm.

The outer diameter (dc) of the cord is preferred to be 1.02 mm≤dc≤1.10 mm.

### EFFECTS OF THE INVENTION

In a heavy-duty pneumatic tire according to one aspect of the present invention, interlayer separation in the belt is suppressed by enhancing the rigidity of the belt without increasing the tire mass.

### BRIEF DESCRIPTION OF THE DRAWINGS

Fig. 1 is a cross-sectional view showing part of a tire according to an embodiment of the present invention;
Fig. 2 is an enlarged cross-sectional view showing part of the tire shown in Fig. 1;
Fig. 3 is an enlarged cross-sectional view showing part of the belt in the lower vicinity of a shoulder groove in the tire shown in Fig. 1;
Fig. 4 is a view showing a cross section of a cord that forms part of the belt shown in Fig. 3; and
Fig. 5(a) is a perspective view schematically showing a cut portion of a sample to be used for measuring peel resistance between belt plies, and Fig. 5(b) is a perspective view schematically showing a test piece cut out from the sample.

### DETAILED DESCRIPTION OF THE EMBODIMENTS

In the following, preferred embodiments of the present invention are described in detail with reference to the accompanying drawings when applicable.

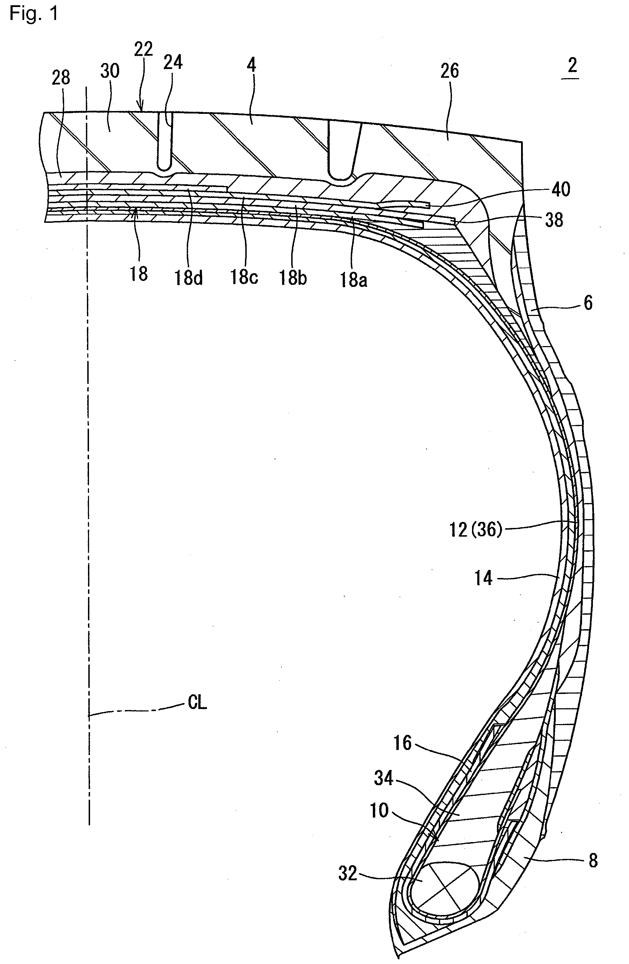

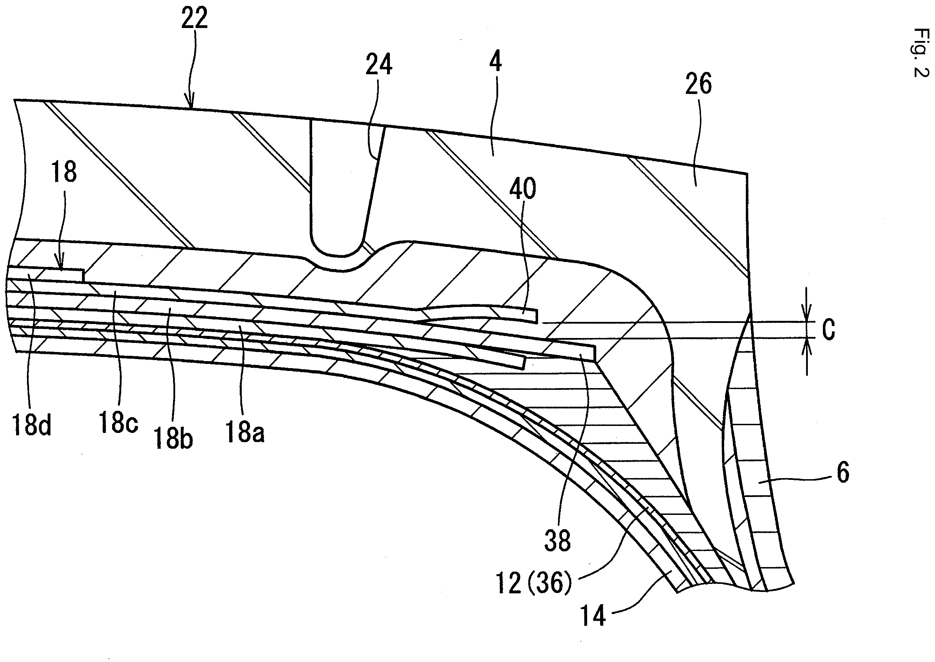

Figs. 1 and 2 show heavy-duty pneumatic tire 2. Vertical directions in Fig. 1 are tire radial directions, horizontal directions are tire axial directions, and directions perpendicular to the drawings are circumferential directions of tire 2. Center line (CL) of tire 2 also indicates the equatorial plane of tire 2. Except for the tread pattern, the shape of tire 2 is symmetrical to the equatorial plane.

Tire 2 includes tread 4, sidewall 6, chafer 8, bead 10, carcass 12, inner liner 14, filler 16 and belt 18. Tire 2 is a tubeless tire.

Tread 4 is shaped to protrude in a radially outer direction. Tread 4 forms tread surface 22, which makes contact with a road surface. On tread surface 22, grooves 24 are formed in a circumferential direction. Grooves 24 make the tread pattern. The axially outer edge of tread 4 along with its vicinity is referred to as shoulder section 26 of tire 2.

Tread 4 is formed with base layer 28 and cap layer 30. Cap layer 30 is positioned on the radially outer side of base layer 28. Cap layer 30 is laminated on base layer 28. Base layer 28 is made of a crosslinked rubber that exhibits excellent adhesiveness. The typical rubber component to make base layer 28 is natural rubber. Cap layer 30 is made of a crosslinked rubber that exhibits excellent wear resistance, heat resistance and grip performance.

Sidewall 6 extends from an edge of tread 4 toward the approximately radially inner direction. The radially outer-side portion of sidewall 6 is bonded with tread 4. The radially inner-side portion of sidewall 6 is bonded with chafer 8. As clearly seen in Fig. 1, sidewall 6 is positioned on the axially outer side of carcass 12. Sidewall 6 is made of a crosslinked rubber that exhibits excellent cut resistance and weatherability. Sidewall 6 prevents damage in carcass 12.

Chafer 8 extends from sidewall 6 toward the approximately radially inner direction. Chafer 8 is made of a crosslinked rubber that exhibits excellent wear resistance. Chafer 8 abuts the flange of rim 60. The rigidity of chafer 8 is greater than that of sidewall 6. Chafer 8 prevents turn-in deformation in a portion of bead 10 when tire 2 is running.

Bead 10 has core 32 and apex 34, which extends from core 32 toward the radially outer direction. Core 32 is in a ring shape and includes non-stretchable wound wires. The typical material for the wires is steel. Apex 34 tapers in a radially outer direction. Apex 34 is made of a highly rigid crosslinked rubber.

Carcass 12 is made of carcass ply 36. Carcass ply 36 is bridged between beads 10 on both sides, formed along tread 4 and sidewall 6. Carcass ply 36 is turned up around core 32 from the axially inner side toward the outer side. Carcass ply 36 is made up of numerous cords arranged in parallel and a topping rubber. Carcass 12 may be formed using two or more carcass plies 36.

Filler 16 is positioned near bead 10. Filler 16 is laminated on carcass 12. Along with carcass ply 36, filler 16 is turned up around core 32 of bead 10. Filler 16 is made up of numerous cords arranged in parallel and a topping rubber. Filler 16 is capable of suppressing turn-in deformation of a portion in bead 10.

Inner liner 14 is positioned on the inner side of carcass 12. Inner liner 14 is made of a crosslinked rubber. A rubber with excellent air shielding is used for inner liner 14. Inner liner 14 retains the inflation pressure of tire 2.

As shown in Figs. 1 and 2, belt 18 extends in an axial direction. Belt 18 is positioned on the radially inner side of tread 4. Belt 18 is positioned on the radially outer side of carcass 12. Belt 18 reinforces carcass 12. Belt 18 has four layers - first ply (18a), second ply (18b), third ply (18c) and fourth ply (18d) - laminated from the radially inner side in that order. First ply (18a) positioned on the radially innermost side is laminated directly on carcass 12, which is on the inner side of the first ply. It is an option for belt 18 to be made of three layers.

With respect to an axial direction, second ply (18b) has the greatest width and fourth ply (18d) has the smallest width among the four layers of belt 18 in tire 2. As shown in Fig. 2, edge 40 of third ply (18c) is separated from edge 38 of second ply (18b). Rubber that forms base layer 28 is filled in the gap between both edges (38, 40), which are separated from each other. Since edge 40 of third ply (18c) is covered by the rubber of base layer 28 to be supported therein, its deformation is suppressed. Although not shown in the drawings, from a viewpoint of suppressing deformation, a covering rubber having a highly complex modulus of elasticity (E*) is preferred to be further provided for covering both edges (38, 40). From the viewpoint of suppressing deformation, the distance (C) (gauge (C) shown in Fig. 2) between edge 38 of second ply (18b) and edge 40 of third ply (18c) is preferred to be at least 1.5 mm but no greater than 6.0 mm.

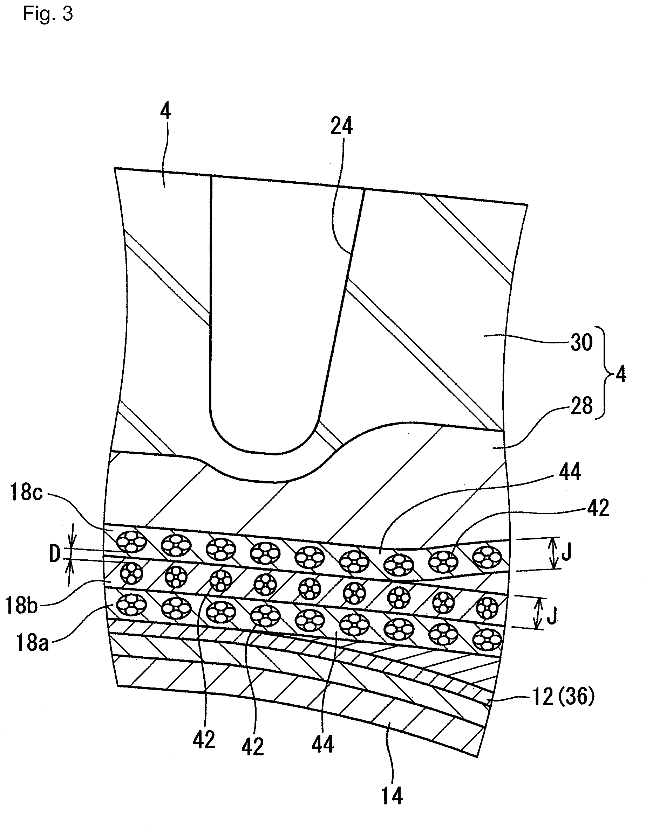

As shown in Fig. 3, plies (18a, 18b, 18c, 18d) are each made of numerous cords 42 arranged in parallel and topping rubber 44. Cords 42 incline to the equatorial plane. With respect to the equatorial plane, the inclination direction of cords 42 of first ply (18a) is the same as the inclination direction of cords 42 of second ply (18b); the inclination direction of cords 42 of second ply (18b) is opposite the inclination direction of cords 42 of third ply (18c); and the inclination direction of cords 42 of third ply (18c) is the same as the inclination direction of cords 42 of fourth ply (18d). In each ply, the absolute value of the inclination angle of cords 42 to the equatorial plane is 15-70 degrees.

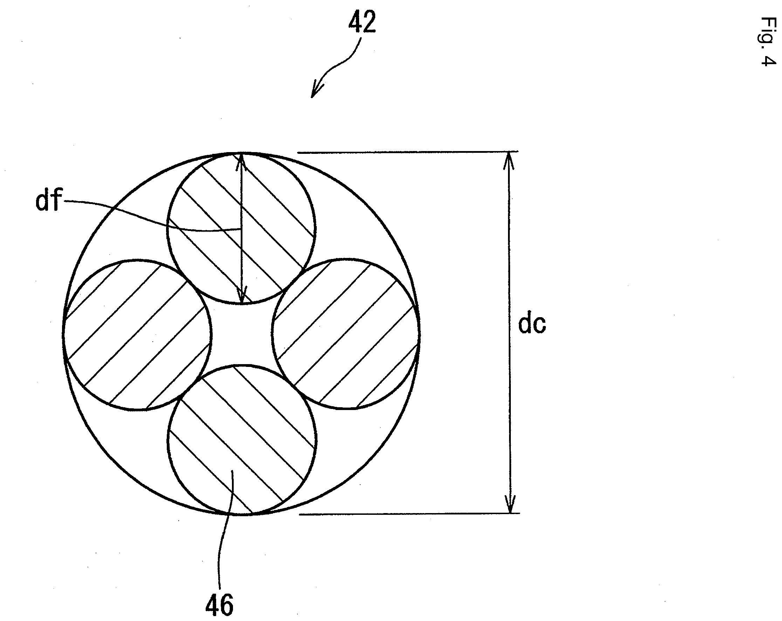

In belt 18, each cord 42 has a 1×4 single-strand structure of four filaments 46 as shown in Fig. 4. Compared with a 1×5 single-strand structure made of five filaments employed often in conventional heavy-duty tires, filaments with a greater diameter can be used in such a structure without increasing cord diameter.

Since there is no need to increase cord diameter, the topping thickness (gauge J) of belt 18 shown in Fig. 3 can be made thinner than in the conventional structure, and there is no need to increase the thickness. As a result, an increase in the mass of belt 18 and in the mass of tire 2 are suppressed. The gauge (J) of belt 18 is preferred to be at least 88% but no greater than 100% of the gauge (J) of a conventional belt having a 1×5 structure. Gauge (D) (denoted as (D)) indicating the distance between cords 42 of adjacent plies in a thickness direction is secured, and the adhesiveness between the plies (also referred to as peeling resistance) is also enhanced. Accordingly, separation near the edge of belt 18 is effectively suppressed.

Using larger-diameter filaments than those in conventional belts increases the flexural rigidity (F) of cord 42. Accordingly, deformation of belt 18 is suppressed. Separation near the edge of belt 18 is effectively suppressed.

As described above, tire 2 is capable of maintaining gauge (D) without increasing the tire mass, while enhancing the flexural rigidity of cords 42. Tire 2 has a structure that effectively suppresses separation near the edge of belt 18. The structure is especially effective for suppressing separation in belt 18 positioned at the lower portion of shoulder grooves 24. Each filament 46 is made of non-stretchable material. Atypical non-stretchable material is steel.

In addition to the capability of suppressing separation, other properties such as impact resistance are also important for belt 18. To enhance impact resistance, it is important for belt 18 to have tensile strength (E) per cord 42 within a predetermined range, while it has the flexural rigidity mentioned above. To achieve both sufficient impact resistance and capability of suppressing separation, the ratio A (=F/E) of flexural rigidity (F) to tensile strength (E) per cord is set to be 0.090 gcm/N≤A≤0.112 gcm/N, and tensile strength (E) per cord is set to be 1550N≤E≤1750N.

If the ratio A (=F/E) is smaller than 0.090, warping of the cord increases, and gauge (D) may become smaller. On the other hand, if the ratio A (=F/E) exceeds 0.112, the flexural rigidity becomes too great, and that may cause difficulty in molding a tire. From those viewpoints, the ratio A (=F/E) is preferred to be 0.098 gcm/N≤A≤0.108 gcm/N.

If tensile strength (E) per cord is less than 1550N, other properties such as the impact resistance of the belt may be difficult to maintain. On the other hand, if tensile strength (E) per cord exceeds 1750N, using such cords causes a cost hike, and the production cost of a tire may increase accordingly.

Also, even if flexural rigidity (F) per cord is within a range that is determined from ranges of tensile strength (E) and ratio A (=F/E), to achieve the effects of suppressing separation with certainty, flexural rigidity (F) is more preferred to be 157 gcm≤F≤184 gcm.

To achieve the aforementioned mechanical characteristics in cords, it is preferred to use high tensile strength steel as the steel for filaments. Outer diameter (dc) of each cord 42 is preferred to be at least 85% but no greater than 99% of the outer diameter of a cord used in a conventional 1×5 structure. Even in such a range, outer diameter (dc) of cord 42 is more preferred to be 1.02 mm≤dc≤1.10 mm. The outer diameter (df) of filament 46 for cord 42 is preferred to be 0.410 mm≤df≤0.445 mm.

The intervals of cords 42 in each ply are preferred to be at least 103% but no greater than 113% of the intervals of cords in a conventional 1×5 structure.

### EXAMPLES

In the following, the effects of the present invention are made clear by examples shown below. However, the present invention should not be limited to the descriptions of those examples.

### [Example 1]

A tire of Example 1 was prepared, having the basic structure shown in Fig. 1 and being provided with a belt having the basic structure shown in Figs. 2 and 3. The tire size was 295/80R22.5. Table 1 shows specifications of the belt provided in the tire. Namely, Table 1 shows the strand structure of cords, tensile strength (E) per cord, flexural rigidity (F) per cord, ratio A (=F/E) of flexural rigidity (F) to tensile strength (E), cord diameter (dc), filament diameter (df) of a cord, thickness of topping rubber of the belt (gauge J), and rubber thickness between cords of adjacent plies (gauge D). The material for filaments is high tensile strength steel having a tensile strength of 3300 MPa.

The tensile strength was measured according to JIS-G3510. The flexural rigidity was measured using Stiffness Tester (model 150-D) made by Taber Industries. The gauge (J) indicates the value at the time of designing a tire. The gauge (D) is an actual value measured in a manufactured tire. Table 1 shows peel resistance between plies of the belt in each example. The method for measuring peel resistance is described in a later "peel test."

### [Examples 2∼4 and Comparative Example 1]

Tires were prepared for Examples 2∼4 and Comparative Example 1 the same as in the tire for Example 1 except that specifications for each belt were changed as shown in Table 1.

### [Gauge (J) and Gauge (D)]

Both gauges (J) and (D) in each example were obtained by using the cords specified in Table 1. In Table 1, gauge (D) is shown in millimeters (mm) and the value is shown in an index based on the value obtained in Comparative Example 1 being set at 100. The smaller the index, the smaller the gauge (J), and that indicates a better tire. Gauge (J) in each belt in Examples 1∼3 is smaller than that in the belt of Comparative Example 1. Also, in each of Examples 1-3, in addition to a smaller gauge (J), gauge (D) is greater (has more room) than that in Comparative Example 1. Gauge (J) in Example 4 is the same as that in Comparative Example 1, but gauge (D) is greater (has more room) than that in Comparative Example 1. As a result, Examples 1∼4 each have a greater ply peel resistance than Comparative Example 1 has, as shown in Table 1.

### [Peel Resistance]

Each test tire was mounted on an 8.25×22.5 rim. Each tire was filled with air to have an inflation pressure of 900 kPa, and a load of 35.79N was applied thereon. Each test tire traveled 200,000 km on a bench test machine with a drum drive system. After the test drive, peel resistance between plies in belt 18 was measured in each tire (peel test). Peel testing is described later. In Table 1, test results are shown in indices based on the result obtained in Comparative Example 1 being set at 100. The greater the index value, the more excellent the peel resistance.

**Table 1**

| | | comp. example 1 | example 1 | example 2 | example 3 | example 4 |
|---|---|---|---|---|---|---|
| strand structure of cord | | 1x5 | 1x4 | 1x4 | 1x4 | 1x4 |
| tensile strength (E) of cord | (N) | 1650 | 1650 | 1550 | 1750 | 1650 |
| flexural rigidity (F) of cord | (gcm) | 142 | 161 | 167 | 157 | 184 |
| ratio A (=F/E) | | 0.086 | 0.098 | 0.108 | 0.090 | 0.112 |
| cord diameter (dc) | (mm) | 1.12 | 1.03 | 1.05 | 1.02 | 1.10 |
| filament diameter (df) | (mm) | 0.380 | 0.415 | 0.425 | 0.410 | 0.445 |
| topping thickness (gauge J) | (index) | 100 | 95 | 97 | 93 | 100 |
| rubber thickness betw cords (gauge D) | (mm) | 0.38 | 0.43 | 0.47 | 0.40 | 0.49 |
| peel resistance betw plies | (index) | 100 | 115 | 126 | 105 | 130 |

### [Peel Test]

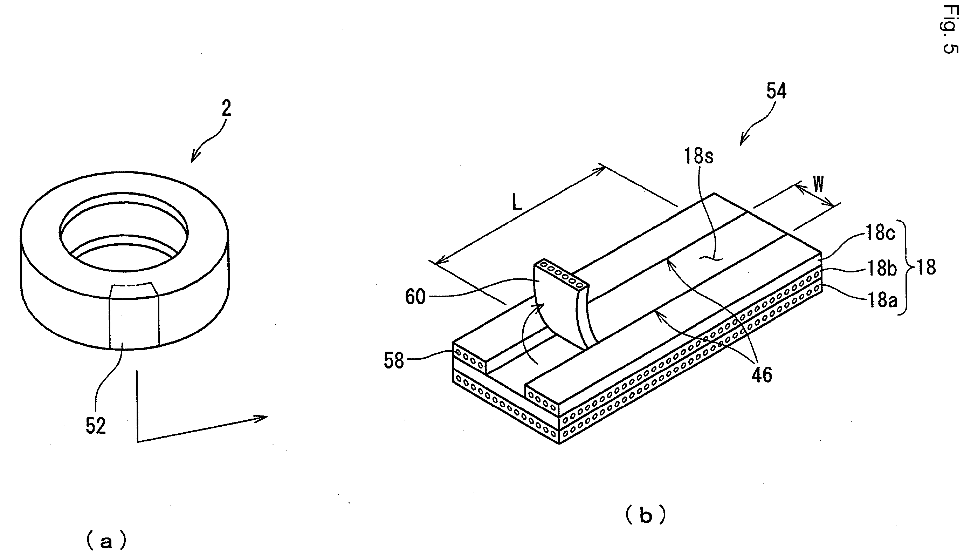

A method for measuring peel resistance between second ply (18b) and third ply (18c) of belt 18 is described below with reference to Fig. 5. According to the results in the tire industry and in the drum running test, peeling has been observed between the second and third plies. One of the reasons for such peeling is thought to be greater shear force exerted between the plies when the tire is deformed, caused by the opposite inclination directions of the cords in the second and third plies as described above. Accordingly, in the peel test here, only the peel resistance between second ply (18b) and third ply (18c) is measured, and no test is conducted between first ply (18a) and second ply (18b).

After tire 2 is driven for 200,000 km, its peel resistance is measured. As shown in Fig. 5(a), test sample 52 is taken out from one of the multiple tires 2 on which a 200,000 km test has been conducted under the same conditions. Test piece 54 is cut out from sample 52 as shown in Fig. 5(b). Test piece 54 includes first ply (18a), second ply (18b) and third ply (18c) of belt 18.

Peel resistance was determined as specified in JIS-K6256-1. To measure peel resistance, third ply (18c) of test piece 54 is peeled from second ply (18b) as shown in Fig. 5(b). The width (W) of a portion of third ply (18c) to be peeled (peeling layer (18s)) is 25.0±0.5 mm, and length (L) to be peeled is at least 100 mm. To avoid causing change in width (W) of peeling layer (18s), cut line 56 is preferred to be made in advance along both side edges of peeling layer (18s) of third ply (18c) in a cutting direction. Moreover, it is also preferred to pull out one cord 58 from each of the outer portions near both side edges of peeling layer (18s). One of the ends 60 of peeling layer (18s) is peeled in advance as a grip margin by a tester (not shown).

Test piece 54 is fixed to a peel test machine (not shown). Grip margin 50 is clamped by a clamp jig of the test machine. Peeling layer (18s) is pulled by the clamp jig, and is peeled from second ply (18b). The rate of peeling is set at 50.0±2.5 mm per minute. The peeling force and peeled distance are measured and a graph is formed to show their relationship. The peel resistance is the force with respect to the 25 mm width (W). Generally, the peel resistance varies while peeling progresses. Variations in measurement values may also be analyzed based on JIS-K6274 to obtain the average value.

As shown in Table 1, belts in the examples are capable of maintaining a greater gauge (D) than the belt in the comparative example. In addition, the belts in the examples are capable of maintaining a smaller gauge (J) than the belt in the comparative example. From those evaluation results, it is found that the tire related to the present invention is excellent.

### POTENTIAL INDUSTRIAL APPLICATION

The tire described above may be used on any of various heavy-duty vehicles.

### DESCRIPTION OF NUMERICAL REFERENCES

- 2: tire
- 4: tread
- 6: sidewall
- 8: chafer
- 10: bead
- 12: carcass
- 14: inner liner
- 16: filler
- 18: belt
- 18a: first ply
- 18b: second ply
- 18c: third ply
- 18d: fourth ply
- 22: tread surface
- 24: groove
- 26: shoulder section
- 28: base layer
- 30: cap layer
- 32: core
- 34: apex
- 36: carcass ply
- 38,40: edge
- 42: cord
- 44: topping rubber
- 46: filament

## Claims

1. A heavy-duty pneumatic tire, comprising:
a tread (4);
a pair of sidewalls (6);
a pair of beads (10);
a carcass (12); and
a belt (18),
wherein the belt is formed with a plurality of plies (18a, 18b, 18c, 18d) laminated in a tire radial direction,
each ply (18a, 18b, 18c, 18d) has numerous cords (42) arranged in parallel and a topping rubber (44), and
the cord (42) has a 1 x4 single-strand structure,
**characterized in that**
the ratio A (=F/E) of flexural rigidity (F) to tensile strength (E) of each cord (42) is set at 0.090 gcm/N≤A≤0.112 gcm/N, and
tensile strength (E) per cord (42) is 1550N≤E≤1750N.

2. The heavy-duty pneumatic tire according to claim 1, wherein the ratio A (=F/E) is set at 0.098 gcm/N≤A≤0.108 gcm/N.

3. The heavy-duty pneumatic tire according to claim 1 or 2, wherein the diameter (df) of a filament (46) in the cord (42) is set at 0.410 mm≤df≤0.445 mm.

4. The heavy-duty pneumatic tire according to any of claims 1 to 3, wherein the outer diameter (dc) of the cord (42) is set at 1.02 mm≤dc≤1.10 mm.

5. The heavy-duty pneumatic tire according to any of claims 1 to 4, wherein a rubber thickness (D) between cords is set at 0.40mm≤D≤0.49mm.

6. The heavy-duty pneumatic tire according to any of the preceding claims, wherein a flexural rigidity (F) is set at 157 gcm≤F≤184 gcm.

7. The heavy-duty pneumatic tire according to any of the preceding claims, wherein the belt (18) comprises three plies (18a, 18b, 18c) or four plies (18a, 18b, 18c, 18d) laminated from the radially inner side to the radially outer side of the tire, wherein an edge (40) of the third ply (18c) is separated from an edge (38) of the second ply (18b).

8. The heavy-duty pneumatic tire according to claim 7, wherein rubber is filled in a gap between both edges (38, 40).

9. The heavy-duty pneumatic tire according to claim 7 or 8, wherein the second ply (18b) has the greatest width, and preferably the fourth ply (18d) has the smallest width.

10. The heavy-duty pneumatic tire according to any of claims 7 to 9, both edges (38, 40) are covered by a rubber having a highly complex modulus of elasticity (E*).

11. The heavy-duty pneumatic tire according to any of claims 7 to 10, distance (C) between the edge (38) of second ply (18b) and the edge (40) of third ply (18c) is at least 1.5 mm but not greater than 6.0 mm.

12. The heavy-duty pneumatic tire according to any of the preceding claims, wherein the 1×4 single-strand structure comprises four filaments (46).

13. The heavy-duty pneumatic tire according to any of the preceding claims, wherein the tensile strength (E) of each cord is preferably increased by increasing the diameter (df) of the filaments (46) rather than increasing the number of filaments per cords.

14. The heavy-duty pneumatic tire according to any of the preceding claims, wherein
an inclination direction of cords (42) of first ply (18a) with respect to the equatorial plane of the tire is the same as an inclination direction of cords (42) of second ply (18b);
an inclination direction of cords (42) of second ply (18b) is opposite the inclination direction of cords (42) of third ply (18c); and
an inclination direction of cords (42) of third ply (18c) is the same as the inclination direction of cords (42) of fourth ply (18d).

15. The heavy-duty pneumatic tire according to claim 14, wherein, in each ply, the absolute value of the inclination angle of cords (42) to the equatorial plane is between 15 to 70 degrees.

## Patentansprüche

1. Schwerlastluftreifen, der Folgendes aufweist:
eine Lauffläche (4);
ein Paar von Seitenwänden (6);
ein Paar von Wülsten (10);
eine Karkasse (12); und
einen Gurt (18),
wobei der Gurt mit einer Vielzahl von Lagen (18a, 18b, 18c, 18d) ausgebildet ist, die in einer Reifenradialrichtung laminiert sind,
jede Lage (18a, 18b, 18c, 18d) zahlreiche Fäden (42), die parallel angeordnet sind, und einen Auflagegummi (44) hat, und
der Faden (42) einen 1x4-Einzelstrangaufbau hat,
**dadurch gekennzeichnet, dass**
ein Verhältnis A (= F/E) einer Biegesteifigkeit (F) zu einer Zugfestigkeit (E) von jedem Faden (52) auf 0,090 gcm/N≤A≤0,112 gcm/N eingestellt ist, und
eine Zugfestigkeit (E) pro Faden (42) 1550N≤E≤1750N ist.

2. Schwerlastluftreifen nach Anspruch 1, wobei das Verhältnis A (=F/E) auf 0,098 gcm/N≤A≤0,108 gcm/N eingestellt ist.

3. Schwerlastluftreifen nach Anspruch 1 oder 2, wobei der Durchmesser (df) eines Filaments (46) in dem Faden (42) auf 0,410 mm≤df≤0,445 mm eingestellt ist.

4. Schwerlastluftreifen nach einem von Ansprüchen 1 bis 3, wobei der Außendurchmesser (dc) des Fadens (42) auf 1,02 mm≤dc≤1,10 mm eingestellt ist.

5. Schwerlastluftreifen nach einem von Ansprüchen 1 bis 4, wobei eine Gummidicke (D) zwischen Fäden auf 0,40mm≤D≤0,49mm eingestellt ist.

6. Schwerlastluftreifen nach einem der vorangehenden Ansprüche, wobei eine Biegefestigkeit (F) auf 157 gcm≤F≤184 gcm eingestellt ist.

7. Schwerlastluftreifen nach einem der vorangehenden Ansprüche, wobei der Gurt (18) drei Lagen (18a, 18b, 18c) oder vier Lagen (18a, 18b, 18c, 18d) aufweist, die von der radial inneren Seite zu der radial äußeren Seite des Reifens laminiert sind, wobei ein Rand (40) von der dritten Lage (18c) von einem Rand (38) der zweiten Lage (18b) getrennt ist.

8. Schwerlastluftreifen nach Anspruch 7, wobei ein Gummi in einen Spalt zwischen beide Ränder (38, 40) gefüllt ist.

9. Schwerlastluftreifen nach Anspruch 7 oder 8, wobei die zweite Lage (18b) die größte Breite hat und vorzugsweise die vierte Lage (18d) die kleinste Breite hat.

10. Schwerlastluftreifen nach einem von Ansprüchen 7 bis 9, wobei beide Ränder (38, 40) durch einen Gummi abgedeckt sind, der einen hochkomplexen E-Modul (E*) hat.

11. Schwerlastluftreifen nach einem von Ansprüchen 7 bis 10, wobei ein Abstand (C) zwischen dem Rand (38) der zweiten Lage (18b) und dem Rand (40) der dritten Lage (18c) zumindest 1,5 mm ist, aber nicht größer als 6,0 mm ist.

12. Schwerlastluftreifen nach einem der vorangehenden Ansprüche, wobei der 1x4-Einzelstrangaufbau vier Filamente (46) aufweist.

13. Schwerlastluftreifen nach einem der vorangehenden Ansprüche, wobei die Zugfestigkeit (E) von jedem Faden vorzugsweise erhöht wird durch ein Erhöhen des Durchmessers (df) der Filamente (46) eher als ein Erhöhen der Anzahl von Filamenten pro Faden.

14. Schwerlastluftreifen nach einem der vorangehenden Ansprüche, wobei
eine Inklinationsrichtung von Fäden (42) der ersten Lage (18a) hinsichtlich der Äquatorialebene des Reifens die gleiche ist wie eine Inklinationsrichtung von Fäden (42) der zweiten Lage (18b);
eine Inklinationsrichtung von Fäden (42) der zweiten Lage (18b) entgegengesetzt zu der Inklinationsrichtung von Fäden (42) der dritten Lage (18c) ist; und
eine Inklinationsrichtung von Fäden (42) der dritten Lage (18c) die gleiche wie die Inklinationsrichtung von Fäden (42) der vierten Lage (18d) ist.

15. Schwerlastluftreifen nach Anspruch 14, wobei in jeder Lage der Absolutwert des Inklinationswinkels von Fäden (42) zu der Äquatorialebene zwischen 15 und 70 Grad ist.

## Revendications

1. Pneu pour fonctionnement intensif comprenant :
une bande de roulement (4) ;
une paire de parois latérales (6) ;
une paire de talons (10) ;
une carcasse (12) ; et
une ceinture (18),
dans lequel la ceinture est formée avec une pluralité de plis (18a, 18b, 18c, 18d) déposés en couche dans une direction radiale de pneu,
chaque pli (18a, 18b, 18c, 18d) a de nombreuses cordes (42) agencées en parallèle et un caoutchouc de gommage (44), et
la corde (42) a une structure à brin unique 1 x 4,
**caractérisé en ce que** :
le rapport A (= F/E) de rigidité à la flexion (F) sur la résistance à la traction (E) de chaque corde (42) est déterminé à 0,090 gcm/N ≤ A ≤ 0,112 gcm/N, et
la résistance à la traction (E) par corde (42) est de 1550N ≤ E ≤ 1750N.

2. Pneu pour fonctionnement intensif selon la revendication 1, dans lequel le rapport A (=F/E) est déterminé à 0,098 gcm/N ≤ A ≤ 0,108 gcm/N.

3. Pneu pour fonctionnement intensif selon la revendication 1 ou 2, dans lequel le diamètre (df) d'un filament (46) dans la corde (42) est déterminé à 0,410 mm ≤ df ≤ 0,445 mm.

4. Pneu pour fonctionnement intensif selon l'une quelconque des revendications 1 à 3, dans lequel le diamètre externe (dc) de la corde (42) est déterminé à 1,02 mm ≤ dc ≤ 1,10 mm.

5. Pneu pour fonctionnement intensif selon l'une quelconque des revendications 1 à 4, dans lequel une épaisseur de caoutchouc (D) entre les cordes est déterminée à 0,40 mm ≤ D ≤ 0,49 mm.

6. Pneu pour fonctionnement intensif selon l'une quelconque des revendications précédentes, dans lequel une rigidité à la flexion (F) est déterminée à 157 gcm ≤ F ≤ 184 gcm.

7. Pneu pour fonctionnement intensif selon l'une quelconque des revendications précédentes, dans lequel la ceinture (18) comprend trois plis (18a, 18b, 18c) ou quatre plis (18a, 18b, 18c, 18d) déposés en couche à partir du côté radialement interne jusqu'au côté radialement externe du pneu, dans lequel un bord (40) du troisième pli (18c) est séparé d'un bord (38) du deuxième pli (18b).

8. Pneu pour fonctionnement intensif selon la revendication 7, dans lequel le caoutchouc est déversé dans un espace entre les deux bords (38, 40).

9. Pneu pour fonctionnement intensif selon la revendication 7 ou 8, dans lequel le deuxième pli (18b) a la plus grande largeur et de préférence le quatrième pli (18d) a la plus petite largeur.

10. Pneu pour fonctionnement intensif selon l'une quelconque des revendications 7 à 9, les deux bords (38, 40) sont recouverts par un caoutchouc ayant un module d'élasticité (E*) très complexe.

11. Pneu pour fonctionnement intensif selon l'une quelconque des revendications 7 à 10, la distance (C) entre le bord (38) du deuxième pli (18b) et le bord (40) du troisième pli (18c) est d'au moins 1,5 mm mais n'est pas supérieur à 6,0 mm.

12. Pneu pour fonctionnement intensif selon l'une quelconque des revendications précédentes, dans lequel la structure à brin unique 1 x 4 comprend quatre filaments (46).

13. Pneu pour fonctionnement intensif selon l'une quelconque des revendications précédentes, dans lequel la résistance à la traction (E) de chaque corde est de préférence augmentée en augmentant le diamètre (df) des filaments (46) plutôt qu'en augmentant le nombre de filaments par cordes.

14. Pneu pour fonctionnement intensif selon l'une quelconque des revendications précédentes, dans lequel :
une direction d'inclinaison des cordes (42) du premier pli (18a) par rapport au plan équatorial du pneu est la même qu'une direction d'inclinaison des cordes (42) du deuxième pli (18b) ;
une direction d'inclinaison des cordes (42) du deuxième pli (18b) est opposée à la direction d'inclinaison des cordes (42) du troisième pli (18c) ; et
une direction d'inclinaison des cordes (42) du troisième pli (18c) est la même que la direction d'inclinaison des cordes (42) du quatrième pli (18d).

15. Pneu pour fonctionnement intensif selon la revendication 14, dans lequel, dans chaque pli, la valeur absolue de l'angle d'inclinaison des cordes (42) sur le plan équatorial est comprise entre 15 et 70 degrés.
